# EUROPÄISCHE PATENTSCHRIFT

(11) **EP 3 057 837 B1**
(45) Veröffentlichungstag und Bekanntmachung des Hinweises auf die Patenterteilung: **02.05.2018**
(21) Anmeldenummer: 14777010.1
(22) Anmeldetag: 27.09.2014
(51) Int. Cl.: B60R 19/52, B60K 11/08

(54) **ZIERGITTER FÜR EINEN KRAFTWAGENBUG**
DECORATIVE GRILLE FOR A MOTOR VEHICLE FRONT
GRILLE DÉCORATIVE POUR UN FRONT DE VÉHICULE

(30) Priorität: 16.10.2013 DE 102013017131
(43) Veröffentlichungstag der Anmeldung: 24.08.2016
(73) Patentinhaber: Daimler AG, 70327 Stuttgart (DE)
(72) Erfinder: MAIER, Hans-Peter, 72202 Nagold (DE)
(74) Vertreter: JENSEN & SON
(86) Internationale Anmeldenummer: PCT/EP2014/002625
(87) Internationale Veröffentlichungsnummer: WO 2015/055278

(56) Entgegenhaltungen:
- EP-A1- 2 733 020
- DE-A1-102012 013 699
- US-A1- 2007 182 174
- US-A1- 2011 204 680

## Beschreibung

Die Erfindung betrifft ein Ziergitter für einen Kraftwagenbug gemäß Oberbegriff des Anspruchs 1.

Ziergitter werden auch als Kühlergitter bezeichnet und dienen am Kraftwagenbug üblicherweise zur Überdeckung einer Einlassöffnung, hinter welcher zumindest bei Kraftwagen mit Frontmotor und Wasserkühlung normalerweise der Motorkühler angeordnet ist. Dabei kommen einteilige oder aber auch mehrteilige Ziergitter zum Einsatz, welche dann beispielsweise um ein Emblem herum angeordnet und an einem entsprechenden Halterahmen fixiert werden.

Aus der DE 40 01 447 C1 geht ein Ziergitter für Kraftfahrzeuge hervor, welches im Frontbereich des Kraftfahrzeugs anzuordnen ist und gitterförmig angeordnete Längs- und Querlamellen aufweist, welche so ausgebildet sind, dass der durchströmende Fahrtwind in gewünschter Weise geleitet wird und sich partiell gewünschte Druckverhältnisse in der Luftströmung einstellen.

EP 2 733 020 A1, US 207 018 174 A1 und US 2011 020 4680 A1 zeigen ebenfalls luftdurchlässige Ziergitter für den Frontbereich von Kraftfahrzeugen, wobei die Gitter durch eine Vielzahl sich wiederholender kleinerer Zierelemente gestaltet sind.

Die DE 10 2012 013 699 A1 zeigt insbesondere ein solches Ziergitter, bei dem an den Kreuzungspunkten von im Wesentlichen horizontal und vertikal verlaufenden Gitterstreben stirnseitig geschlossene Dome ausgebildet sind.

Aufgabe der vorliegenden Erfindung ist es, ein alternatives Ziergitter für einen Kraftwagenbug zu schaffen, welches in einfacher und kostengünstiger Weise herstellbar ist.

Diese Aufgabe wird erfindungsgemäß durch ein Ziergitter mit den Merkmalen des Anspruchs 1 gelöst. Vorteilhafte Ausgestaltungen mit zweckmäßigen Weiterbildungen der Erfindung ergeben sich aus den Unteransprüchen.

Das Ziergitter weist eine Vielzahl von Zierelementen auf, welche jeweils eine Zierelement-Stirnwand und eine von dieser abstehende Zierelement-Seitenwand umfassen. Die Zierelemente sind mittels Verbindungselementen, über welche jeweils benachbarte Zierelemente miteinander verbunden sind, auf Abstand zueinander gehalten. Dabei sind die Zierelemente in Reihen angeordnet, wobei die Zierelemente der einen Reihe einen seitlichen Versatz zu den Zierelementen der benachbart angeordneten Reihe von Zierelementen aufweisen. Erfindungsgemäß ist vorgesehen, dass die Zierelement-Seitenwände partiell mit einer Öffnung, einem Ausschnitt oder dergleichen offenen Bereich versehen sind, wobei der jeweilige offene Bereich der Zierelemente in einer Längsseite der zugeordneten Zierelement-Seitenwand vorgesehen ist.

Durch die teilweise offene Ausbildung der jeweiligen Zierelement-Seitenwand können insbesondere größere Kerne für entsprechende Werkzeuge eingesetzt werden, welche eine einfachere Werkzeugtemperierung gewährleisten und zudem auch ermöglichen, dass die einzelnen Zierelemente in einem geringeren Abstand zueinander angeordnet werden können. Dies ermöglicht die Herstellung filigraner wirkender Ziergitter. Des Weiteren können die Zierelemente selbst kleiner dimensioniert werden, da die jeweiligen Kerne zur Bildung der zugehörigen Zierelemente nicht mehr auf den Innenraum von diesen beschränkt werden müssen, sondern durch den offenen Bereich innerhalb der jeweiligen Zierelement-Seitenwand größer gestaltet werden können. Außerdem kann die Anzahl der Kerne aufgrund der offenen Bereiche der Zierelement-Seitenwände reduziert werden.

Bei einem vorteilhaften Ausführungsbeispiel des Ziergitters ist vorgesehen, dass die Zierelemente eine trogförmige Grundkontur aufweisen, die vorzugsweise abgerundet ist, das heißt die Zierelemente weisen keine kantigen beziehungsweise spitzen Ecken auf. Durch eine derartige Ausgestaltung lässt sich -in Draufsicht auf die Zierelement-Stirnwand gesehen- die Kontur eines Stäbchens für das jeweilige Zierelement herstellen.

Das jeweilige Zierelement weist eine jeweilige, trogartig umlaufende Zierelement-Seitenwand auf, die - gemäß dem erfinderischen Grundgedanken - partiell mit einer Öffnung, einem Ausschnitt oder dergleichen offenen Bereich versehen ist.

Vorzugsweise ist der offene Bereich - in Draufsicht auf die Zierelement-Stirnwand gesehen - an der unteren Längsseite vorgesehen, so dass dieser von einem Betrachter des eingebauten Ziergitters praktisch nicht erkennbar ist und somit der optische Eindruck des Ziergitters nicht in unerwünschter Weise beeinflusst wird.

Die Verbindungselemente sind in weiterer Ausgestaltung der Erfindung mit den Längsseiten der zugeordneten Zierelement-Seitenwände verbunden, wobei zwischen den jeweiligen Verbindungselementen der zugehörige offene Bereich - innerhalb der jeweiligen Längsseite - vorgesehen ist. Hierdurch lassen sich Kerne im jeweiligen Werkzeug zur Herstellung des Ziergitters schaffen, welche einen besonders geringen Abstand zwischen den jeweiligen Zierelementen ermöglichen.

In vorteilhafter Ausgestaltung der Erfindung erstreckt sich der offene Bereich bis zur Zierelement-Stirnwand innerhalb der zugehörigen Längsseite der Zierelement-Seitenwand. Mit anderen Worten ist erfindungsgemäß der offene Bereich so gestaltet, dass zwischen diesen und der Stirnwand kein Wandbereich der Seitenwand mehr vorhanden ist. Im Ergebnis ergibt sich somit ein L-förmiger Querschnitt des Zierelements, welches mittels eines Kerns besonders einfach herstellbar ist.

Weiterhin vorteilhaft ist es, wenn der offene Bereich in einer jeweiligen unteren Längsseite der Zierelement-Seitenwand vorgesehen ist. Somit sind diese offenen Bereiche durch eine den Kraftwagenbug von vorne betrachtende Person nicht erkennbar.

Eine weitere vorteilhafte Ausführungsform sieht vor, dass die Zierelemente mauerartig versetzt zueinander angeordnet und durch die Verbindungselemente voneinander beabstandet sind. Dabei wird insbesondere der Lufteinass nicht negativ beeinflusst und es ergibt sich nur ein geringfügig größerer Versperrungsgrad.

Eine weitere vorteilhafte Ausführungsform sieht vor, dass die offenen Bereiche innerhalb der jeweiligen Zierelement-Seitenwände als zumindest im Wesentlichen trapezförmige Aussparungen ausgebildet sind. Somit ergibt sich eine besonders günstige Entformung des Ziergitters nach dessen Herstellung.

Schließlich hat es sich als vorteilhaft gezeigt, wenn in weiterer Ausgestaltung der Erfindung jeweilige Stirnseiten der Verbindungsstege und der Zierelement-Seitenwände in einer gemeinsamen Ebene angeordnet sind. Hierdurch kann eine besonders günstige Werkzeugtrennung und somit Herstellung des Ziergitters erreicht werden.

Im Folgenden wird ein bevorzugtes Ausführungsbeispiel des Ziergitters anhand der Zeichnung näher erläutert. Dabei zeigen:
- Fig. 1a, 1b: jeweils eine ausschnittsweise und leicht perspektivische Vorderansicht bzw. Rückansicht auf ein Ziergitter für einen Kraftwagenbug;
- Fig. 2: eine ausschnittsweise Schnittansicht durch jeweilige Zierelemente des Ziergitters gemäß Fig. 1a entlang einer durch die Linie II - II in Fig. 1a repräsentierten Schnittebene;

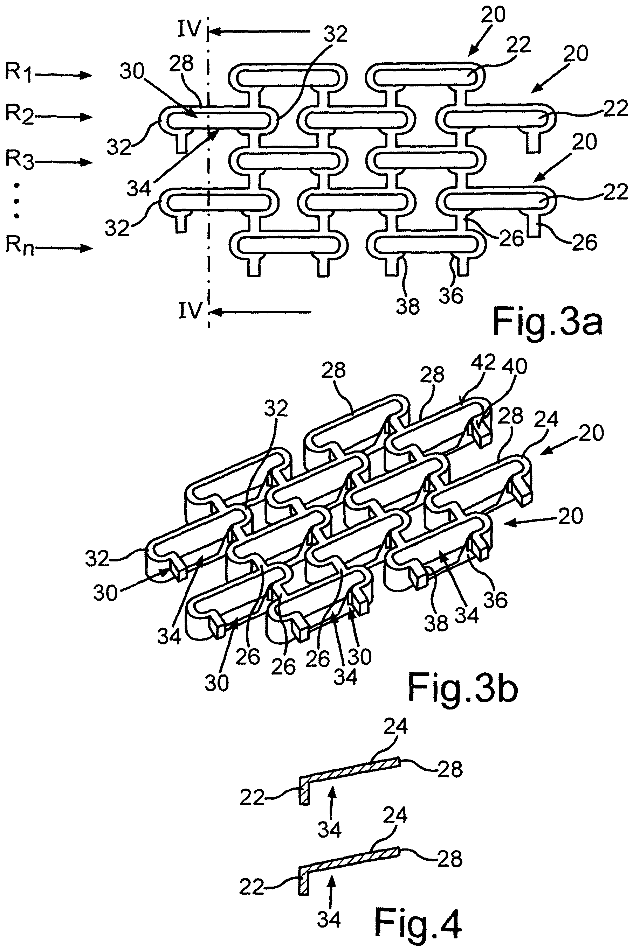

- Fig. 3a, 3b: eine ausschnittsweise Vorderansicht sowie eine ausschnittsweise, perspektivische Rückansicht auf ein Ausführungsbeispiel des erfindungsgemäßen Ziergitters für einen Kraftwagenbug; welches eine Vielzahl von Zierelemente, welche jeweils eine Zierelement-Stirnwand und eine im Einbauzustand des Ziergitters von dieser in Fahrzeuglängsrichtung nach hinten abstehende jeweilige Zierelement-Seitenwand umfassen, und mit einer Vielzahl von Verbindungselementen, über welche jeweils benachbarte Zierelemente miteinander verbunden sind, wobei die Zierelement-Seitenwände der Zierelemente jeweils einen offenen Bereich aufweisen und
- Fig. 4: eine ausschnittsweise Schnittansicht durch das Ziergitter entlang einer durch die Linie IV - IV in Fig. 3a repräsentierten, senkrecht zu einer Hauptebene des Ziergitters bzw. im Einbauzustand in Fahrzeuglängsrichtung und in Fahrzeughochrichtung verlaufende Schnittansicht durch zwei Zierelemente des Ziergitters.

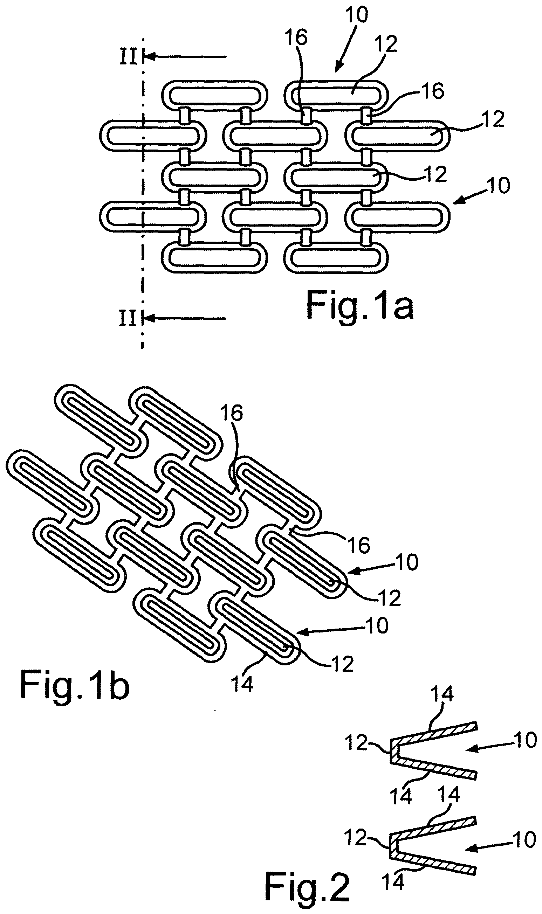

Fig. 1 a und 1b zeigen jeweils in einer ausschnittsweisen und perspektivischen Vorderansicht beziehungsweise Rückansicht ein Ziergitter für den Bug-/Frontbereich eines Kraftfahrzeugs, welches eine Vielzahl von trogartigen Zieretementen 10 umfasst, die jeweils eine Zierelement-Stirnwand 12 und eine jeweils von dieser -in Fahrzeuglängsrichtung nach hinten hin- abstehende Zierelement-Seitenwand 14 umfassen. Die jeweilige Zierelement-Stirnwand 12 kann dabei vorderseitig, also auf der der Zierelement-Seitenwand 14 abgewandten Seite, beispielsweise mit einer Beschichtung versehen, insbesondere verchromt, sein, so dass die Vielzahl von Zierelement-Stirnwänden 12 gemäß der in Fig. 1 a dargestellten Vorderansicht eine optisch hochwertige Vorderseite des Ziergitters ausbilden. Die einzelnen Zierelemente 10 sind dabei unter Vermittlung jeweiliger Verbindungselemente 16 mit den jeweils benachbarten Zierelementen 10 verbunden, und zwar so, dass die Zierelemente 10 nach Art einer Ziegelmauer versetzt und dabei voneinander beabstandet angeordnet sind.

Wie insbesondere aus Fig. 2 erkennbar ist, ist die jeweilige, nach hinten hin abstehende Zierelement-Seitenwand 14 in einem entsprechenden Winkel zur jeweiligen Zierelement-Stirnwand 12 angeordnet und komplett um diese umlaufend ausgebildet.

Das Ziergitter gemäß Fig. 1a bis 2, welches zumindest im Wesentlichen aus Kunststoffmaterial besteht, ist dabei relativ schwierig herzustellen, da eine Vielzahl äußerst kleiner Kerne zur Herstellung der jeweiligen trogförmigen Zierelemente 10 sowie der Zwischenräume zwischen diesen Elementen erforderlich sind. Dies kann insbesondere hinsichtlich der Werkzeugtemperierung problematisch sein. Zudem können die jeweiligen Zierelemente nur in einem hinreichenden Abstand zueinander angeordnet werden, da werkzeugbedingt ein Mindestabstand der einzelnen Werkzeugkerne zur Ausbildung der Zierelemente beziehungsweise des Ziergitters erforderlich ist.

Fig. 3a bis 4 zeigen ein weiteres Ausführungsbeispiel des Ziergitters, welches sich gegenüber dem Ziergitter gemäß den Fig. 1a bis 2 dadurch auszeichnet, dass es konstruktionsbedingt eine engere Platzierung/Anordnung der Zierelemente zueinander ermöglicht und auch eine Reduzierung der Breite der Zierelemente trotz deren trogförmigen Ausgestaltung und Herstellung mittels temperierter Werkzeugkerne. Dadurch lässt sich ein filigran wirkender Aufbau des Ziergitters realisieren.

Fig. 3a und 3b zeigen in einer ausschnittsweisen Vorderansicht bzw. einer ausschnittsweisen und perspektivischen Rückansicht das Ziergitter für einen Kraftwagenbug mit einer Vielzahl von Zierelementen 20, welche vorliegend eine im Wesentlichen trogförmige beziehungsweise topfförmige Rundkontur aufweisen. Diese wird gebildet durch eine jeweilige Zierelement-Stirnwand 22, von welcher -in Fahrzeuglängsrichtung betrachtet- eine jeweilige Zierelement-Seitenwand 24 nach hinten hin absteht. Das Ziergitter ist vorliegend insgesamt aus Kunststoff hergestellt, wobei die jeweiligen Zierelemente 20 einstückig gestaltet sind. Ebenfalls einstückig mit den Zierelementen 20 sind jeweilige Verbindungselemente 26 ausgebildet, über welche jeweils benachbarte Zierelemente 20 miteinander verbunden sind. Die Zierelemente 20 sind dabei nach Art einer Backsteinmauer versetzt und im Abstand zueinander angeordnet, wobei die jeweiligen Verbindungselemente 26 den Abstand jeweiliger Reihen R₁, R₂, R₃, Rₙ von Zierelementen 20 bestimmen.

Wie insbesondere aus Fig. 3a erkennbar ist, bilden die jeweiligen Zierelement-Stirnwände 22 nach vorne beziehungsweise zur Außenseite des Kraftwagenbugs hin eine sogenannte Stäbchenoptik, also eine Vielzahl von langgestreckten streifenartigen Elementen, welche untereinander verbunden sind. Die jeweiligen, auf der den Zierelement-Seitenwänden 24 abgewandten Seite angeordneten Vorderseiten der Zierelement-Stirnwände 22 können dabei mit einer Beschichtung oder dergleichen versehen und insbesondere verchromt sein. Das Aufbringen der Beschichtung kann beispielsweise und insbesondere durch Heißprägen erfolgen.

Wie insbesondere aus Fig. 3b erkennbar ist, weisen die trogförmigen Zierelemente 20 beziehungsweise deren jeweilige Zierelement-Seitenwand 24 jeweils eine obere Längsseite 28 und eine untere Längsseite 30 auf, welche über jeweils bogenförmige Wandbereiche 32 miteinander verbunden sind. Unter oberer und unterer Längsseite 28, 30 ist dabei deren Anordnung im verbauten Zustand des Ziergitters am Kraftwagenbug zu verstehen. Demzufolge erstreckt sich die jeweilige obere Längsseite 28 in Fahrzeugquerrichtung beziehungsweise etwa horizontal im jeweiligen oberen Bereich des Zierelements 20, wohingegen sich die jeweilige untere Längsseite 30 unterhalb von dieser ebenfalls in Fahrzeugquerrichtung und etwa horizontal erstreckt. An den Längsseiten 28, 30 sind auch die jeweiligen Verbindungselemente 26 angeordnet.

Allerdings ist die jeweilige untere Längsseite 30 jeweils mit einem offenen Bereich 34 ausgebildet, welche vorliegend als im Wesentlichen trapezförmige Aussparung zwischen jeweils benachbarten Verbindungselementen 26, welche sich jeweils unterseitig an die untere Längsseite 30 anschließen, ausgebildet ist. Somit verbleiben von der jeweiligen unteren Längsseite 30 nur jeweilige Randbereiche 36, 38, welche sich an die jeweils zugehörigen bogenförmigen Wandbereiche 32 der jeweiligen Zierelement-Seitenwand 24 sowie an das jeweils seitlich zugeordnete Verbindungselement 26 anschließen.

Wie insbesondere aus Fig. 4 erkennbar ist, welche in einer ausschnittsweisen Schnittansicht entlang einer durch die Linie IV-IV in Fig. 3a repräsentierten Schnittebene einen Schnitt durch zwei der Zierelemente 20 darstellt, erkennbar ist, erstreckt sich dabei der jeweilige offene Bereich 34 nach unten hin bis zur jeweiligen Zierelement-Stirnwand 22. Mit anderen Worten verbleibt im Querschnitt im Bereich des jeweiligen offenen Bereichs 34 lediglich ein im Wesentlichen L-förmiger Querschnitt des jeweiligen Zierelements 20, wobei die untere Längsseite 30 der jeweiligen Zierelement-Seitenwand 24 im offenen Bereich 34 vollständig weggelassen worden ist.

Durch dieses Weglassen der jeweiligen Zierelement-Seitenwand 24 im offenen Bereich 34 ist es möglich, ein Werkzeug mit größeren Stempeln einzusetzen als dies beispielsweise bei dem anhand der Fig. 1a bis 2 beschriebenen Ziergitter möglich ist.

Hierdurch können nämlich Stempel eingesetzt werden, welche sich von der jeweiligen oberen Längsseite 28 beispielsweise des Zierelements 20 in einer Reihe R₁ bis zur oberen Längsseite 28 des Zierelements 20 in einer dritten Reihe R₃ erstreckt.

Insbesondere aus Fig. 3b ist des Weiteren erkennbar, dass jeweilige Stirnseiten 40 der Verbindungselemente 26 und jeweilige Stirnseiten 42 der Zierelement-Seitenwände 24 in einer gemeinsame Ebene, welche parallel zu der durch die Zierelement-Stirnwände 22 gebildeten Ebene verläuft, angeordnet sind. Hierdurch ist die Möglichkeit einer besonders günstigen Werkzeugtrennung im Bereich dieser Ebene gegeben.

Insgesamt ist somit erkennbar, dass vorliegend ein Ziergitter geschaffen ist, bei welchem vergleichsweise große Kerne zum Einsatz kommen können, was einer besonders günstigen Werkzeugtemperierung förderlich ist. Außerdem können filigranere Ziergitter mit engeren Abständen der jeweiligen Zierelemente 20 dargestellt werden. Dabei wird der Lufteinlass des jeweiligen Ziergitters nicht negativ beeinflusst, es kann sich lediglich ein geringfügig vergrößerter Versperrungsgrad ergeben.

Das Ziergitter kann dabei insgesamt einteilig gestaltet sein und somit die entsprechende Öffnung im Kraftwagenbug überdecken. Gleichfalls können auch mehrere Ziergitter zusammengesetzt und an einem Rahmen gehalten werden, und beispielsweise ein entsprechendes Emblem umgeben. Die vorliegende beschriebene Variante beschreibt demzufolge lediglich die Ausgestaltung der flächigen Form des entsprechenden Gitterelements.

## Patentansprüche

1. Ziergitter für einen Kraftwagenbug, mit einer Vielzahl von Zierelementen (10,20), welche jeweils eine Zierelement-Stirnwand (22) und eine von dieser abstehende Zierelement-Seitenwand (24) umfassen, und mit einer Vielzahl von Verbindungselementen (26), über welche jeweils benachbarte Zierelemente (20) miteinander verbunden sind, wobei die Zierelemente (10,20) in Reihen angeordnet sind und wobei die Zierelemente (10,20) der einen Reihe einen seitlichen Versatz zu den Zierelementen (10,20) der benachbart angeordneten Reihe von Zierelementen (10,20) aufweisen,
**dadurch gekennzeichnet, dass**
die Zierelement-Seitenwände (24) der Zierelemente (20) einen jeweiligen offenen Bereich (34) aufweisen, welcher in einer Längsseite (30) der zugeordneten Seitenwand (24) angeordnet ist, wobei die Verbindungselemente (26) mit den Längsseiten (30) der zugeordneten Zierelement-Seitenwände (24) verbunden sind, und der zugehörige offene Bereich (34) zwischen den jeweiligen Verbindungselementen (26) vorgesehen ist.

2. Ziergitter nach Anspruch 1,
**dadurch gekennzeichnet, dass**
die Zierelemente (20) eine im Wesentlichen abgerundet trogförmige Grundkontur aufweisen.

3. Ziergitter nach einem der vorhergehenden Ansprüche,
**dadurch gekennzeichnet, dass**
der offene Bereich (34) in einer jeweiligen unteren Längsseite (30) der Zierelement-Seitenwand (24) vorgesehen ist.

4. Ziergitter nach einem der vorhergehenden Ansprüche,
**dadurch gekennzeichnet, dass**
der offene Bereich (34) sich bis zur Zierelement-Stirnwand (22) innerhalb der zugehörigen Längsseite (30) der Zierelement-Seitenwand (24) erstreckt.

5. Ziergitter nach einem der vorhergehenden Ansprüche,
**dadurch gekennzeichnet, dass**
der offene Bereich (34) als zumindest im Wesentlichen trapezförmige Aussparung ausgebildet ist.

6. Ziergitter nach einem der vorhergehenden Ansprüche,
**dadurch gekennzeichnet, dass**
die Zierelemente (20) mauerartig versetzt zueinander angeordnet und durch die Verbindungselemente (26) voneinander beabstandet sind.

7. Ziergitter nach einem der vorhergehenden Ansprüche,
**dadurch gekennzeichnet, dass**
jeweilige Stirnseiten (40, 42) der Verbindungselemente (26) und der Zierelement-Seitenwände (24) in einer gemeinsamen Ebene angeordnet sind.

## Claims

1. Decorative grille for a motor vehicle front, comprising a plurality of decorative elements (10, 20), each having a decorative element end wall (22) and a decorative element side wall (24) projecting therefrom, and a plurality of connecting elements (26), by way of which adjacent decorative elements (20) are connected to one another, wherein the decorative elements (10, 20) are arranged in rows and the decorative elements (10, 20) of the one row have a lateral offset relative to the decorative elements (10, 20) of the adjacent row of decorative elements (10, 20),
**characterised in that**
the decorative element side walls (24) of the decorative elements (20) have a respective open region (34) located in a long side (30) of the associated side wall (24), wherein the connecting elements (26) are connected to the long sides (30) of the associated decorative element side walls (24) and the associated open region (34) is provided between the respective connecting elements (26).

2. Decorative grille according to claim 1,
**characterised in that**
the decorative elements (20) have a substantially rounded trough-shaped contour.

3. Decorative grille according to any of the preceding claims,
**characterised in that**
the open region (34) is provided in a respective lower long side (30) of the decorative element side wall (24).

4. Decorative grille according to any of the preceding claims,
**characterised in that**
the open region (34) extends to the decorative element end wall (22) within the associated long side (30) of the decorative element side wall (24).

5. Decorative grille according to any of the preceding claims,
**characterised in that**
the open region (34) is designed as an at least substantially trapezoidal recess.

6. Decorative grille according to any of the preceding claims,
**characterised in that**
the decorative elements (20) are arranged with a mutual offset in the manner of a wall and spaced from one another by the connecting elements (26).

7. Decorative grille according to any of the preceding claims,
**characterised in that**
respective end faces (40, 42) of the connecting elements (26) and of the decorative element side walls (24) are arranged in a common plane.

## Revendications

1. Grille de décoration pour un avant de véhicule automobile, comprenant une pluralité d'éléments de décoration (10, 20), qui comportent respectivement une paroi frontale (22) d'élément de décoration et une paroi latérale (24) d'élément de décoration éloignée de celle-ci, et comprenant une pluralité d'élément de liaison (26) qui permettent de relier chacun des éléments de décoration (20) adjacents les uns aux autres, les éléments de décoration (10, 20) étant disposés en rangées et les éléments de décoration (10, 20) d'une rangée présentant un déport latéral par rapport aux éléments de décoration (10, 20) de la rangée d'éléments de décoration (10, 20) disposée à proximité, **caractérisée en ce que** les parois latérales (24) des éléments de décoration (20) présentent respectivement une zone ouverte (34) qui est aménagée sur un côté longitudinal (30) de la paroi latérale associée (24), les éléments de liaison (26) étant reliés aux côtés longitudinaux (30) des parois latérales (24) d'élément de décoration, et la zone ouverte correspondante (34) étant aménagée entre les élément de liaison respectifs (26).

2. Grille de décoration selon la revendication 1, **caractérisée en ce que** les éléments de décoration (20) présentent un contour de base en forme d'auge sensiblement arrondi.

3. Grille de décoration selon l'une quelconque des revendications précédentes, **caractérisée en ce que** la zone ouverte (34) est aménagée sur un côté longitudinal (30) inférieur respectif de la paroi latérale (24) d'élément de décoration.

4. Grille de décoration selon l'une quelconque des revendications précédentes, **caractérisée en ce que** la zone ouverte (34) s'étend jusqu'à la paroi frontale (22) d'élément de décoration à l'intérieur du côté longitudinal (30) correspondant de la paroi latérale (24) d'élément de décoration.

5. Grille de décoration selon l'une quelconque des revendications précédentes, **caractérisée en ce que** la zone ouverte (34) est conçue sous la forme d'un évidement au moins sensiblement trapézoïdal.

6. Grille de décoration selon l'une quelconque des revendications précédentes, **caractérisée en ce que** les éléments de décoration (20) sont décalés les uns par rapport aux autres à la manière d'un mur et sont éloignés les uns des autres par les éléments de liaison (26).

7. Grille de décoration selon l'une quelconque des revendications précédentes, **caractérisée en ce que** chacun des côtés frontaux (40, 42) des éléments de liaison (26) et des parois latérales (24) d'élément de décoration sont disposés dans un plan commun.
